# EUROPÄISCHE PATENTSCHRIFT

(11) **EP 2 297 842 B1**
(45) Veröffentlichungstag und Bekanntmachung des Hinweises auf die Patenterteilung: **10.08.2016**
(21) Anmeldenummer: 09776881.6
(22) Anmeldetag: 30.06.2009
(51) Int. Cl.: H02M 7/521

(54) **VERFAHREN, SCHALTUNGSANORDNUNG UND BRÜCKENSCHALTUNG**
METHOD, CIRCUIT CONFIGURATION, AND BRIDGE CIRCUIT
PROCÉDÉ, AGENCEMENT DE COMMUTATION ET CIRCUIT EN PONT

(30) Priorität: 14.07.2008 DE 102008032876
(43) Veröffentlichungstag der Anmeldung: 23.03.2011
(73) Patentinhaber: SEW-EURODRIVE GmbH & Co. KG, 76646 Bruchsal (DE)
(72) Erfinder: WOLF, Harald, 76698 Ubstadt-Weiher (DE)
(86) Internationale Anmeldenummer: PCT/EP2009/004697
(87) Internationale Veröffentlichungsnummer: WO 2010/006695

(56) Entgegenhaltungen:
- EP-A- 0 901 212
- JP-A- 61 269 518
- JP-A- 2001 358 567

## Beschreibung

Die Erfindung betrifft ein Verfahren, eine Schaltungsanordnung und eine Brückenschaltung.

Bekannt sind Schaltungsanordnungen in Halbbrückenschaltung und Vollbrückenschaltung, um aus einer Gleichspannung eine Wechselspannung zu erzeugen, die beispielsweise in Schaltnetzteilen in Verbindung mit einem nachgeschalteten Transformator mit Gleichrichter eine potentialfreie Gleichspannung bereitstellen.

Bekannt sind auch drei- oder mehrphasige Brückenschaltungen zur Erzeugung einer mehrphasigen Wechselspannung, wie sie beispielsweise in Frequenzumrichtem zur variablen Drehzahlverstellung von Drehstrommotoren vorgesehen werden. Bei solchen Umrichtern zur Speisung von Elektromotoren ist bekannt, jede Motorzuleitung mittels einer Halbbrücke von Halbleiterschaltern zu versorgen, wobei die Halbbrücken aus einer unipolaren Spannung, der sogenannten Zwischenkreisspannung, versorgt werden. Die Zwischenkreisspannung wird von einem netzgespeisten Gleichrichter oder im generatorischen Betrieb des Elektromotors von diesem selbst erzeugt und erreicht Werte von 500 Volt und mehr.

Dabei werden die Halbleiterschalter in solchen Anordnungen pulsweitenmoduliert betrieben. Im einfachsten Fall werden die Halbleiterschalter "hart" geschaltet. Beim Schaltvorgang fließt dann gleichzeitig Strom durch das Halbleiterschalter während ebenfalls eine Spannung an diesem abfällt. Das Halbleiterschalter wird sozusagen für die Dauer des Schaltvorgangs in seinem aktiven Bereich betrieben, was zu erheblichen Schaltverlusten führen kann.

Die Höhe der Schaltverluste wird auch durch das Verhalten von in den Halbbrücken parallel zu den Halbleiterschaltern vorgesehenen Freilaufdioden beeinflusst. Diese Dioden sind bei MOSFET- Halbleiterschaltern intrinsisch vorhanden und weisen große Rückwärtsströme und einen entsprechend hohen Rückstromabriss auf, so dass in Anordnungen, welche diese Intrinsic-Dioden als Freilaufdioden nutzen, hohe Schaltverluste und transiente Überspannungen an den Halbleiterschaltern auftreten.

In sogenannten DC-DC-Wandlern, wie beispielhaft aus der US 6 356 462 bekannt, kommen resonante Techniken zum Einsatz, die ein Schalten bei Spannung Null, das als ZERO VOLTAGE SWITCHING bezeichnet werden, oder bei Strom Null, das als ZERO CURRENT SWITCHING bezeichnet werden kann, ermöglichen. Die Vielzahl der Ausführungsformen kann in Resonanz-Wandler und Quasi-Resonanzwandler gruppiert werden, wobei bei dem Quasi-Resonanzwandler, mit dem ein weiches Schalten, also ein Soft-Switching, ausführbar ist, die Resonanz im Wesentlichen nur für den Zeitraum des Schaltvorgangs manifestiert wird. Im Vergleich zu den hart-schaltenden Wandlern ist bei den Resonanzwandlem ein erhöhter Schaltungsaufwand notwendig. Außerdem muss bei der Auslegung die jeweilige Schaltungstopologie insbesondere auch die der angeschlossenen Last berücksichtigt werden. Oft gelten Restriktionen bezüglicher der Ansteuerverfahren.

In der Druckschrift WO 00/16407 ist ein spezieller Halbleiterschalter beschrieben, dessen Drain-Source-Kapazität extrem spannungsabhängig ist. Bei Spannungen, die kleiner als etwa 10% der betriebsmäßigen Schaltspannung sind, weist die Drain-Source-Kapazität einen sehr hohen Wert auf, der aber mit steigender Spannung rasch auf einen sehr kleinen Wert abnimmt. Mit dieser Eigenschaft ist ein verlustarmes Abschalten erreichbar, da der Strom sehr rasch vom Kanalstrom zum Ladestrom der Drain-Source-Kapazität wird.

Die Druckschrift US 4 841 166 beschreibt eine Gateansteuerschaltung zur Reduzierung von Überspannungen bei Verwendung von MOSFET-Halbleiterschaltem und deren Intrinsic-Dioden als Freilaufdioden. Dabei wird beim Einschalten eines Transistors der Strom durch den Source-Anschluss detektiert und gegebenenfalls durch Reduzierung der Gatespannung der Schaltvorgang verlangsamt, so dass der Rückstrom durch die Freilaufdiode und die resultierende Überspannung begrenzt wird. Allerdings sind die Einschaltverluste vergrößert im Vergleich zu einer Schaltungsausführung mit einer Fast-Recovery-Diode anstelle der Intrinsic-Dioden der MOSFETS- Halbleiterschaltern. Als Stand der Technik wird in dieser Schrift eine Schaltungsanordnung angeführt, bei der eine erste, für Schaltanwendungen optimierte Diode als Freilaufdiode antiparallel zur Serienschaltung eines MOSFET-Halbleiterschaltern mit einer zweiten Diode geschaltet ist. Die zweite Diode bewirkt, dass der Freilaufstrom zwingend über die optimierte Freilaufdiode und nicht über die Intrinsic-Diode fließt.

Aus der EP 0 901 212 A2 ist ein Kompensator für asymmetrische Störströme bei Geräten mit schaltenden Leistungsendstufen bekannt.

Aus der JP2001358567 zusammen mit der JP 61269518 ist ein Ladepfad mit ohmschem Widerstand bekannt, über den eine parasitäre Kapazität einen Halbleiterschalters aufladbar ist.

Der Erfindung liegt die Aufgabe zugrunde, die Ausnutzung von Halbleiterschalter zu verbessern.

Erfindungsgemäß wird die Aufgabe durch eine Schaltungsanordnung nach Anspruch 1 gelöst.

Wichtige Merkmale der Erfindung bei dem Verfahren sind, dass es zum Aufladen einer an den Hauptstromanschlüssen eines Halbleiterschalters wirksamen Kapazität, insbesondere einer intrinsischen Kapazität vorgesehen ist,
wobei die elektrische Vorladung, insbesondere die zumindest teilweise Aufladung, der wirksamen Kapazität zwangsweise über einen Ladestrompfad gesteuert wird.

**Zwangsweise bedeutet hierbei, dass unabhängig von den Betriebsbedingungen des Halbleiterschalters, insbesondere also unabhängig vom Laststrom, die Aufladung erzwungen wird.**

**Der Halbleiterschalter weist erfindungsgemäß einen Steueranschluss und zwei Hauptstromanschlüsse auf, zwischen denen eine wirksame Kapazität angeordnet ist.**

**Somit ist als Halbleiterschalter ein MOSFET- Halbleiterschalter oder ein IGBT-Halbleiterschalter verwendbar. Die erfindungsgemäß wirksame Kapazität ist daher entsprechend als Drain-Source-Kapazität oder als Kollektor-Emitter-Kapazität vorsehbar oder als hierzu parallel angeordneter Kondensator.**

Von Vorteil ist dabei, dass die Sperrspannungsbeanspruchung des Halbleiterschalters reduziert wird, ohne dass die Schaltverluste zunehmen. Es muss keine Rücksicht auf die Leistungshalbleitertopologie und das Pulsverfahren zur Ansteuerung des Halbleiterschalters genommen werden, insbesondere in Schaltungen mit oberen und unteren Schaltern, wie beispielsweise Brückenschaltungen mit pulsweitenmodulierter Ansteuerung. Die Erfindung ist direkt bei Schaltern einer hart-schaltenden Leistungshalbleiteranordnung einsetzbar und erfordert keine nennenswerten Induktivitäten oder Kapazitäten im Laststromkreis.

Vorteilig ist bei der Erfindung also, dass Überspannungen an schnell schaltenden Halbleiterschaltern, wie MOSFET-Halbleiterschalter und IGBT-Halbleiterschalter, reduziert werden, ohne die Schaltverluste zu vergrößern.

Bei der Erfindung wird durch einen zusätzlichen Schaltkreis nach dem Ausschalten eines Halbleiterschalters eine zwangsweise Aufladung seiner Drain-Source-Kapazität beziehungsweise Kollektor-Emitter-Kapazität bewerkstelligt, bevor nach einer ohnehin vorhandenen Totzeit ein eventuell vorhandener gegenüberliegender Halbleiterschalter einschaltet. Dazu ist eine Diode in Serie zum Halbleiterschalter anordenbar, deren Sperrspannung entsprechend der Höhe der vorgesehenen Aufladung bemessen ist. Freilaufdioden in Brückenschaltungen sind dann antiparallel zu dieser Serienschaltung aus Halbleiterschalter und Diode angeordnet. Durch diese Anordnung ist die Drain-Source-Kapazität aufladbar, insbesondere auch dann, wenn der Strom von der parallel liegenden Freilaufdiode geführt wird.

Vorteilig ist bei der Erfindung weiter, dass bei einem spannungsabhängiger Drain-Source-Kapazität sehr hohe Überspannungen verhindert werden, da die Kapazität vorladbar ist, bevor der Laststrom in der Halbbrückenanordnung beim Einschalten des gegenüberliegenden Halbleiterschalters kommutiert. Die unvermeidbare Streuinduktivität der elektrischen Verbindungsleitungen innerhalb eines Brückenzweiges bildet zusammen mit der Drain-Source-Kapazität einen Reihenschwingkreis. Dieser an eine Gleichspannung, nämlich die Zwischenkreisspannung, gelegt wird. Ohne die erfindungsgemäße Vorladung würde die Spannung dann also an der Kapazität auf den doppelten Wert der Zwischenkreisspannung aufschwingen, sofern die Kapazität als konstant angenommen werden kann und keine Bedämpfung berücksichtigt wird. Nimmt die Drain-Source-Kapazität aber mit steigender Spannung sogar stark ab, so kann die Spannung sogar auf das Mehrfache der angelegten Gleichspannung überschwingen. Aufgrund der großen Kapazität bei niedriger Spannung und ohne die erfindungsgemäße Vorladung würde die Spannung zunächst sehr langsam ansteigen und sich somit ein hoher Strom in der Streuinduktivität aufbauen. Die in der Streuinduktivität gespeicherte Energie müsste in der Folge dann In eine abnehmende Kapazität umgespeichert werden, was eine entsprechend vergrößerte Überspannung an der Drain-Source-Kapazität bedingen würde. Mit der erfindungsgemäßen Vorladung der wirksamen Kapazität ist das beschriebene Aufschwingen der Spannung und somit eine entsprechende Überspannung vermeidbar.

Die erfindungsgemäß wirksame Kapazität ist entweder als intrinsische Kapazität des Halbleiterschalters oder als Parallelschaltung der intrinsischen Kapazität des Halbleiterschalters und einem Kondensator realisierbar.

Bei einer vorteilhaften Ausgestaltung wird die Vorladung, insbesondere die zumindest teilweise Aufladung der wirksamen Kapazität, vom Ansteuersignal des Halbleiterschalters zwangsweise über den Ladestrompfad gesteuert. Das Ansteuersignal für die zusätzliche Ladeschaltung wird also aus den Ansteuersignalen der Halbleiterschalter gewonnen. Die Ladeschaltung bedarf somit keiner zusätzlichen galvanischen Trennung zur Signalführung. Es sind nur wenige Bauelemente, insbesondere kleiner Leistung, notwendig und somit ist die Erfindung einfach und kostengünstig ausführbar.

Bei einer vorteilhaften Ausgestaltung umfasst der Halbleiterschalter eine Steuerelektrode, also einen Steueranschluss, und zwei weitere Elektroden, also die Hauptstromanschlüsse, wobei die wirksame Kapazität zwischen den weiteren Elektroden angeordnet ist. Von Vorteil ist dabei, dass die intrinsische, bei Schaltern oft störende Kapazität mittels der Vorladung nicht mehr störend wirksam ist.

Bei einer vorteilhaften Ausgestaltung ist der Ladestrompfad vom Hauptstrompfad, insbesondere der den zu schaltenden Leistungsstrom führt, verschieden. Von Vorteil ist dabei, dass auch bei verschwindendem Strom im Hauptstrompfad der Ladestrompfad unabhängig betreibbar ist, insbesondere mit dem Ansteuerpfad koppelbar ist.

Bei einer vorteilhaften Ausgestaltung umfasst der Ladestrompfad eine Induktivität. Von Vorteil ist dabei, dass diese Induktivität mit der erfindungsgemäß wirksamen Kapazität einen Reihenschwingkreis bildet, so dass eine Vorladung auf ein höheres Spannungsniveau ausführbar ist als die Versorgungsspannung zur Verfügung stellt, da ein Überschwingen des Reihenschwingkreises genutzt wird.

Bei einer vorteilhaften Ausgestaltung wird der Ladestrompfad von derselben Spannungsquelle gespeist, aus der auch eine Treiberschaltung zur Erzeugung des Steuerstroms für den Steueranschluss des Halbleiterschalters gespeist wird, insbesondere wobei die Spannungsquelle galvanisch getrennt ist von einer Signalelektronik eines Umrichters. Von Vorteil ist dabei, dass keine zusätzliche Spannungsquelle notwendig ist sondern es ist beispielhaft die Versorgungsspannung eines Treibers oder Verstärkers als Spannungsquelle für den Ladestrompfad verwendbar, wobei der Treiber beziehungsweise Verstärker die Energie des Ansteuersignals generiert und selbst über eine galvanische Trennung versorgt ist. Die Steuerinformation wird dem Treiber oder Verstärker von einer vorgeordneten Steuerelektronik übermittelt.

Bei einer vorteilhaften Ausgestaltung ist im Ladestrompfad ein weiterer Steuer-Halbleiterschalter vorgesehen. Von Vorteil ist dabei, dass der Strom im Ladestrompfad steuerbar ist. Insbesondere ist der weitere Steuer-Halbleiterschalter ansteuerbar vom Ansteuerpfad für den Halbleiterschalter des Hauptstrompfad, so dass ein zwangsweises Steuern des Ladestrompfades ausführbar ist.

Bei einer vorteilhaften Ausgestaltung ist der Halbleiterschalter in einem Brückenzweig einer Brückenschaltung angeordnet. Von Vorteil ist dabei, dass eine Brückenschaltung mit der erfindungsgemäßen Vorladung ausführbar ist, insbesondere also auch eine Endstufe eines Wechselrichters, eine Netzeinspeiseeinheit einer Solaranlage oder dergleichen.

Bei einer vorteilhaften Ausgestaltung erreicht die mittels der Vorladung erreichte Spannung an der wirksamen Kapazität weniger als 30%, insbesondere weniger als 15%, der zu schaltenden Spannung. Von Vorteil ist dabei, dass schon eine derart geringe Vorladung die auftretenden Überspannungen reduziert. Dies wird erreichbar, indem als wirksame Kapazität eine spannungsabhängige verwendet wird.

Bei einer vorteilhaften Ausgestaltung wird das Vorladen im Wesentlichen während der Totzeit ausgeführt, insbesondere also während desjenigen Zeitabschnitts, in welchem beide Halbleiterschalter einer Halbbrücke der Brückenschaltung ausgeschaltet sind. Von Vorteil ist dabei, dass die Totzeit genutzt wird und bei Beendigung der Totzeit die wirksame Kapazität aufgeladen auf die vorgesehene Vorladespannung ist, wodurch die Überspannungen reduzierbar sind.

Bei einer vorteilhaften Ausgestaltung wird die Induktivität des Ladestrompfads und somit der aus der Induktivität und der wirksamen Kapazität zusammengesetzte Reihenschwingkreis derart dimensioniert, dass die Periodendauer des Schwingkreises kürzer ist als die Totzeit. Somit wird innerhalb der Totzeit das Maximum des Aufschwingens der Spannung erreicht.

Bei einer vorteilhaften Ausgestaltung wird im Ladestrompfad schon ein Ladestrom aufgebaut, während der auszuschaltende Halbleiterschalter sich noch im leitenden Zustand befindet. Bei Einsatz einer Induktivität im Ladestrompfad ist sogar eine noch höhere Spannung erreichbar, wenn der Ladestrom schon vor Totzeit-Beginn aufgebaut wird durch Einschalten des Steuer-Halbleiterschalters.

Wichtige Merkmale bei der Schaltungsanordnung sind, dass sie einen Halbleiterschalter umfasst,
wobei der Halbleiterschalter eine an den Hauptstromanschlüssen eines Halbleiterschalters wirksame Kapazität umfasst, insbesondere einer intrinsischen Kapazität, insbesondere eine Drain-Source-Kapazität eines MOSFET-Halblelterschalters oder eine Kollektor-Emitter-Kapazität eines IGBT-Halbleiterschalters,
wobei zur Vorladung, insbesondere zur zumindest teilweisen Aufladung, der wirksamen Kapazität ein Ladestrompfad vorgesehen ist, insbesondere über den die Vorladung zwangsweise gesteuert wird.

Von Vorteil ist dabei, dass die zwangsweise erfolgende Aufladung ohne Software sondern nur mittels geeigneter Anordnung von Bauteilen erreichbar ist und somit die Überspannungen reduziert werden.

Bei einer vorteilhaften Ausgestaltung ist die wirksame Kapazität derart ausgeführt, dass ihre Kapazität bei zunehmender Spannung abnimmt, insbesondere wobei auch ihre Kapazitätsänderung pro Spannungszunahme abnimmt, also ihre Kapazität bei zunehmender Spannung überproportional abnimmt. Bei einer vorteilhaften Ausgestaltung werden solche Halbleiterschalter verwendet, deren Drain-Source-Kapazität mit steigender Spannung stark abnimmt. Insbesondere werden die Halbleiterschaiter in Brückenschaltungen eingesetzt. Dabei ist eine teilweise Aufladung, beispielsweise auf 10% der die Halbbrücke versorgenden Zwischenkreisspannung, ausreichend, um Überspannungen zu vermeiden. Somit ist für die in Serie geschaltete Diode ein Typ einsetzbar, der eine entsprechend niedrige zulässige Sperrspannung und infolgedessen gleichzeitig eine niedrige Flussspannung aufweist, um ihre Leitendverluste gering zu halten.

Bei einer vorteilhaften Ausgestaltung ist die Schaltungsanordnung die Endstufe eines Wechselrichters oder Umrichters. Von Vorteil ist dabei, dass die Endstufe als Halbbrückenschaltung ausführbar ist und somit der Wirkungsgrad des Umrichters beziehungsweise des Wechselrichters verbessert ist.

Bei einer vorteilhaften Ausgestaltung ist im Hauptstrompfad eine Diode, insbesondere Zenerdiode oder Schottky-Diode, angeordnet, insbesondere ist also dem Halbleiterschalter eine Diode in Reihe zugeschaltet. Vorzugsweise ist die serielle Diode als Schottky-Diode ausgeführt und/oder Avalanche-fest, also Avalanche-rated.

Bei einer vorteilhaften Ausgestaltung werden als Halbleiterschalter MOSFET-Halbleiterschalter verwendet. Von Vorteil ist dabei, dass dann die serielle Diode eine weitere Funktion erfüllt. Die im MOSFET-Halbleiterschalter vorhandene Intrinsic-Diode wirkt nämlich vorteiligerweise nicht als Freilaufdiode. Stattdessen ist die nicht-intrinsische Freilaufdiode als Diode mit optimierten Eigenschaften vorsehbar.

Wichtige Merkmale bei der Brückenschaltung mit einer Schaltungsanordnung sind, dass eine Halbbrücke aus zwei parallel geschalteten Reihenschaltungen besteht, die jeweils einen ersten und eine zweiten in Reihe geschalteten Schaltungsteil aufweisen, wobei eine Querinduktivität zur Verbindung der elektrischen Verbindungspunkte der beiden Schaltungsteile einer jeweiligen Reihenschaltung vorgesehen ist,
wobei ein erster Schaltungsteil der ersten Reihenschaltung einen Halbleiterschalter samt seriell zugeschalteter Diode und der zweite Schaltungsteil der ersten Reihenschaltung eine Freilaufdiode aufweist,
wobei ein erster Schaltungsteil der zweiten Reihenschaltung eine Freilaufdiode und der zweite Schaltungsteil der zweiten Reihenschaltung einen Halbleiterschalter samt seriell zugeschalteter Diode aufweist,
wobei die ersten Schaltungsteile mit dem höheren Potential der Versorgungsspannung und die zweiten Schaltungsteile mit dem niedrigeren verbunden sind.

Von Vorteil ist dabei, dass Überspannungen in Brückenschaltungen vermieden werden, weil die zusätzliche Querinduktivität die für den oben erwähnten Reihenschwingkreis maßgebliche Induktivität vergrößert, so dass die Amplitude des Umschwingstromes verringert ist. Die in den Streuinduktivitäten gespeicherte Energie, die in die Drain-Source-Kapazität umgespeichert wird, ist damit ebenfalls reduziert, so dass die Spannungsüberhöhung geringer ist. Die in der Querinduktivität gespeicherte Energie trägt nicht zur Spannungsüberhöhung bei, da sie durch die Flussspannungen der Freilaufdioden und Halbleiterschalter in Verlustwärme umgesetzt wird. Diese Maßnahme allein, also ohne die erfindungsgemäße Vorladung der Drain-Source-Kapazität, würde zwar die auftretenden Überspannungen reduzieren, würde aber auch die Leitendverluste in den Halbleiterbauelementen erhöhen. Wird diese Maßnahme aber mit dem erfindungsgemäßen Vorladen der Drain-Source-Kapazität kombiniert, so werden Überspannungen vermieden und Leitendverluste reduziert.

Weitere Vorteile ergeben sich aus den Unteransprüchen.

Die Erfindung wird nun anhand von Abbildungen näher erläutert:
Figur 1 zeigt eine H-Brückenschaltung, aufweisend zwei Halbbrückenzweige, mit aus ihr versorgbarer Last, bei der die Erfindung zum Einsatz kommt.
Figur 2 zeigt einen der erfindungsgemäßen Halbbrückenzweige, wobei auch eine Ansteuer- und Ladeschaltung gezeigt ist.
Figur 3 zeigt eine weitere erfindungsgemäße Ansteuer- und Ladeschaltung für einen Halbleiterschalter eines Halbbrückenzweigs.
Figur 4 zeigt eine durch eine Querinduktivität weitergebildete erfindungsgemäße Schaltungsanordnung.

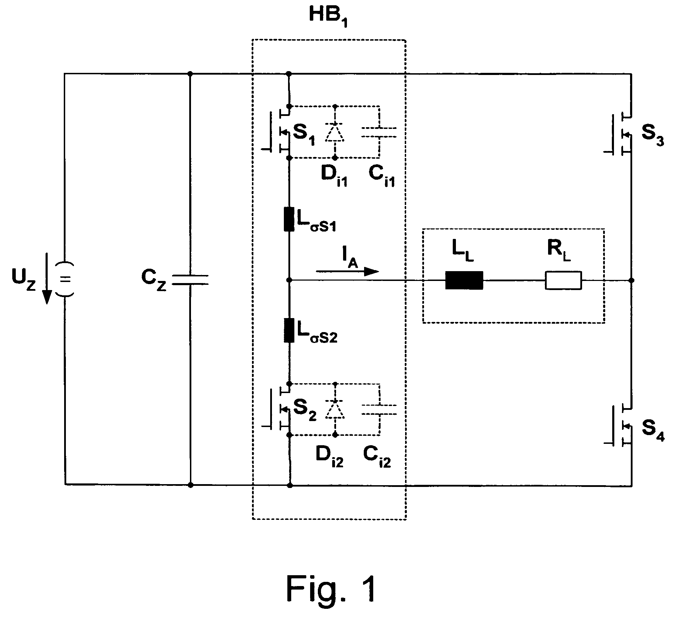

In Figur 1 ist eine Brückenschaltung mit der ohmsch-induktiven Last R_{L} und L_{L} gezeigt, die aus einer H-Brückenschaltung mit vier MOSFET-Halbleiterschaltern (S₁, S₂, S₃, S₄) versorgbar ist. Dabei ist die Halbbrücke HB₁ mit parasitären Streuinduktivitäten L_{σS1} und L_{σS2} gezeigt, die durch den Leiterplatten-Aufbau und/oder Verbindungsleitungen bedingt sind. Außerdem sind die Drain-Source-Kapazitäten Cᵢ₁ und Cᵢ₂ der MOSFET-Halbleiterschalter dargestellt und auch die von den MOSFET- Halbleiterschaltern umfassten Intrinsic-Dioden Dᵢ₁ u Dᵢ₂.

Beispielhaft ist die von der Kapazität C_{z} geglättete, unipolare Zwischenkreisspannung U_{z} von einem Netzgleichrichter erzeugt. Alternativ ist diese Spannung auch mittels einer Batterie. eines Akkumulators oder einem anderen Gleichspannung erzeugenden Modul zur Verfügung stellbar. Aus der Zwischenkreisspannung wird die Halbbrückenschaltung versorgt, die im ersten Brückenzweig eine Reihenschaltung aufweist, in welcher ein oberer Halbleiterschalter S₁ und ein unterer Halbleiterschalter S₂ angeordnet sind, und im zweiten Brückenzweig eine Reihenschaltung aufweist, in welcher ein oberer Halbleiterschalter S₃ und ein unterer Halbleiterschalter S₄ angeordnet sind.

Im Folgenden werden die Vorgänge in der Halbbrücke HB₁ beschrieben, wobei für die zweite Halbbrücke, bestehend aus S₃ und S₄, Entsprechendes gilt.

Die Ansteuerung der Halbleiterschalter S₁ und S₂ erfolgt derart, dass entweder ein erster Zustand 1, bei dem der Halbleiterschalter S₁ geöffnet und der Halbleiterschalter S₂ geschlossen ist, oder ein zweiter Zustand 2 mit umgekehrten Schalterstellungen eingestellt wird.

Beim Übergang von einem Zustand in den anderen wird stets der zunächst geschlossene Halbleiterschalter geöffnet und erst nach einer sogenannten Totzeit der gegenüberliegende Halbleiterschalter geschlossen. Damit wird in sicherer Weise verhindert, dass beim Übergang beide Halbleiterschalter gleichzeitig eingeschaltet sind.

Im Gegensatz zu IGBT- Halbleiterschaltem ist bei MOSFET- Halbleiterschalter eine sogenannte Intrinsic-Diode (Dᵢ₁, Dᵢ₂) vorhanden, da der Sperrschichtaufbau der MOSFET diese bedingt. Diese intrinsischen Dioden haben allerdings sehr hohe Sperrverzugszeiten im Vergleich zu optimierten Schaltdioden und sind daher als Freilaufdiode wenig geeignet. In einer einfachen Tiefsetzstelleranordnung wäre dies weniger störend, da dort kein Stromfluss über die Intrinsic-Diode stattfindet. Im Gegensatz dazu wirken in der Halbbrücke HB1 nach Figur 1 die Intrinsic-Dioden in bekannter Weise als Freilaufdioden.

Beim Betrieb können beim Zustandswechsel zwischen den Zuständen 1 und 2 zwei grundsätzlich unterschiedliche Kommutierungsvorgänge in der Halbbrücke auftreten, abhängig davon in welche Richtung der Laststrom I_{A} zu diesem Zeitpunkt fließt. Stellvertretend sei der Wechsel von Zustand 1 nach Zustand 2 betrachtet, einmal als Fall 1 bei negativem, also in die Halbbrücke hineinfließendem Laststrom und einmal als Fall 2 bei positivem, also in die Halbbrücke herausfließendem Laststrom:

### Fall 1:

Bei negativem Laststrom I_{A} fließt im Zustand 1 der Strom über den geschlossenen Halbleiterschalter S₂ zum negativen Anschluss der Speisespannung U_{z}. Wird nun der Übergang zum Zustand 2 dadurch eingeleitet, dass S₂ ausschaltet, so wird die Drain-Source-Kapazität Cᵢ₂ durch den Laststrom aufgeladen. Der Laststrom soll während des Kommutierungsvorgangs als konstant angenommen werden. Erreicht die Drain-Source-Spannung an Cᵢ₂ den Wert der Zwischenkreisspannung würde der Laststrom bei Nichtvorhandensein der parasitären Streuinduktivitäten L_{σS1} und L_{σS2} schlagartig und ohne transiente Überspannung auf die Freilaufdiode Dᵢ₁ kommutieren. Da aber der Laststrom durch L_{σS2} nicht schlagartig auf Null abnehmen kann, wird die Drain-Source-Kapazität Cᵢ₂ weiter aufgeladen, bis die in den Streuinduktivitäten gespeicherte Energie auf Null abgenommen hat. Die daraus resultierende Überspannung an S₂ ist somit abhängig von der Größe des Laststroms, der betriebsbedingt aber auf definierte Grenzen beschränkt ist. Mittels kurzer Leiterlängen beim Schaltungsaufbau sind kleine Streuinduktivitäten erreichbar, so dass die Überspannungen in dieser Situation beherrschbar sind. Im Gegensatz dazu treten im folgenden Fall 2 vielfach höhere Ströme in den Streuinduktivitäten auf, so dass dort auch bei optimierten Verhältnissen bezüglich der Streuinduktivitäten des Schaltungsaufbaus erhebliche Überspannungen auftreten können.

**Fall 2:** Für diesen Fall sei vereinfach angenommen, dass ein sehr kleiner Laststrom fließt, so dass dessen Einfluss auf den Umschwingvorgang bei den folgenden Betrachtungen außer Acht gelassen werden kann. Ein großer Laststrom bedingt keine prinzipielle Veränderung der Verhältnisse sondern kann als den im Folgenden beschriebenen Vorgängen als überlagert angesehen werden.

Bei positivem Laststrom fließt im Zustand 1 der Strom über die Freilaufdiode Dᵢ₂ vom negativen Anschluss der Speisespannung zur Last. Wird nun der Übergang zum Zustand 2 dadurch eingeleitet, dass S₂ ausschaltet, fließt der Laststrom zunächst weiter durch Dᵢ₂. Erst wenn nach Ablauf der Totzeit der Halbleiterschalter S₁ eingeschaltet wird beginnt der eigentliche Kommutierungsvorgang. Die Drain-Source-Kapazität Cᵢ₂ bildet zusammen mit L_{σS1} und L_{σS2} einen Schwingkreis der über S₁ an die Zwischenkreisspannung gelegt wird. Unter der Annahme einer konstanten Drain-Source-Kapazität Cᵢ₂ ergäbe sich der bekannte sinusförmige Strom- und Spannungsverlauf, wobei die Spannung an der Kapazität auf den doppelten Wert der Gleichspannung der Speisespannung aufschwingt. Tatsächlich beeinflussen aber im Wesentlichen zwei weitere Faktoren die Höhe des Überschwingens, also der transienten Überspannung.
- Erstens ist die Schaltgeschwindigkeit des einschaltenden Halbleiterschalters nur endlich schnell, beispielsweise zwischen 10ns und 200 ns oder mehr je nach Typ des Halbleiterschalters. Somit wird der Halbleiterschalter für eine nennenswerte Zeit in seinem linearen Bereich betrieben wird, was einer Bedämpfung des Schwingkreises durch einen ohmschen Widerstand gleichbedeutend ist. Je kleiner die Periodendauer der Resonanzfrequenz des Schwingkreises im Vergleich zur Schaltzeit des Halbleiterschalters ausfällt, desto besser ist der Schwingkreis bedämpft und damit die Überspannung reduziert. Aus diesem Grund wird beim Aufbau der Schaltung auf eine möglichst kurze und induktivitätsarme Leiterbahnführung geachtet. Außerdem ergibt sich dadurch auch die Möglichkeit, durch eine bewusste Verlangsamung der Schaltgeschwindigkeit, beispielsweise durch Vergrößern des Gatevorwiderstandes in der Treiberschaltung der Gateansteuerung, die transiente Überspannung weiter zu reduzieren. Diese Maßnahme führt allerdings dazu, dass dann die Schaltverluste ansteigen.
- Zweitens ist die Drain-Source-Kapazität der Halbleiterschalter nicht konstant sondern spannungsabhängig. Bei niedriger Drain-Source-Spannung ist die Kapazität deutlich größer als bei hoher Spannung. Vorzugsweise wird ein Halbleiterschalter verwendet, wie er in der WO 00/16407 beschrieben ist. Somit weist dann der Halbleiterschalter eine besonders starke Spannungsabhängigkeit der Drain-Source-Kapazität auf. Dies wirkt sich zwar positiv auf die Ausschaltverluste aus, wie sie bei dem unter Fall 1 beschriebenen Vorgang auftreten. Im vorliegenden Fall 2 aber bewirkt diese Tatsache, ein vielfach stärkeres Überschwingen des Schwingkreises als bei konstanter Kapazität. Aufgrund der großen Kapazität bei niedriger Spannung steigt die Spannung zunächst verlangsamt an, infolgedessen kann sich ein sehr hoher Strom in der Streuinduktivität aufbauen. Die in der Induktivität gespeicherte Energie muss in der Folge aber in eine abnehmende Kapazität umgespeichert werden, was eine entsprechend vergrößerte Überspannung an der Drain-Source-Kapazität bewirkt.

Mittels der Erfindung werden die Überspannungen für den Vorgang im Fall 2 reduziert. Gleichzeitig werden durch die Erfindung hierbei die Schaltverluste reduziert.

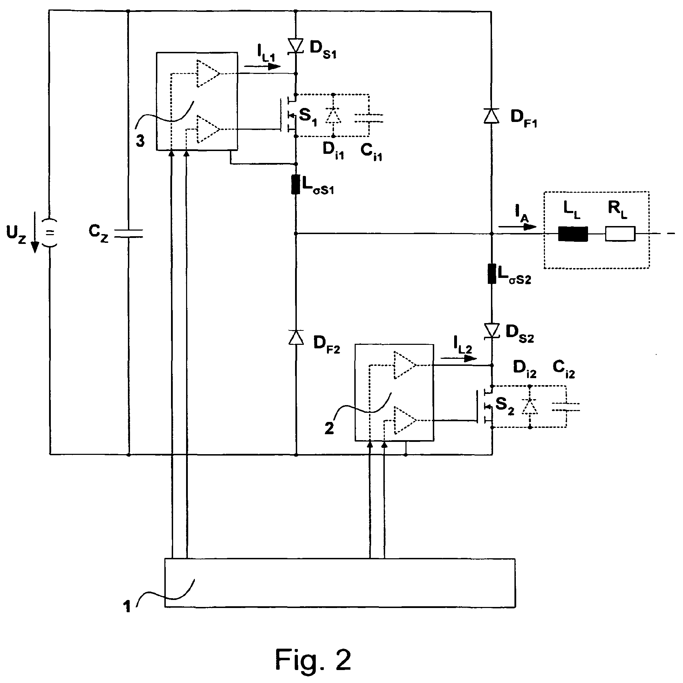

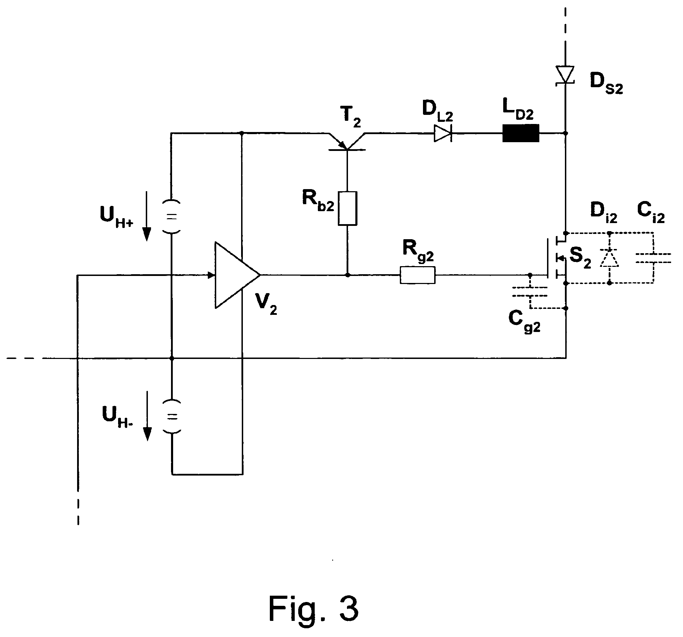

Die erfindungsgemäße Ansteuer- und Ladeschaltung gemäß Figur 2 oder 3 ermöglicht es, vor dem Einschalten eines gegenüberliegenden Schalters die Drain-Source-Kapazität des ausgeschalteten Schalters zwangsweise aufzuladen.

Wie in Figur 2 gezeigt, wird dazu die Ansteuerschaltung 2 und 3 dahingehend erweitert, dass diese eine Ladeschaltung zur Vorladung der Drain-Source-Kapazität des Halbleiterschalters beinhaltet.

Bei einem weiteren erfindungsgemäßen Ausführungsbeispiel wird dieser Schaltungsteil von einer niedrigen Hilfsspannung, die kleiner ist als 50V, beispielsweise 24 Volt, gespeist. Idealerweise ist diese Hilfsspannung dieselbe, aus welcher die Ansteuerschaltung der Gateansteuerung versorgt wird.

In Figur 2 ist eine Ausführungsform gezeigt, bei der die Schaltungsteile, also Ladeschaltung zur Vorladung und Gate-Ansteuerschaltung, durch getrennte Signale von einer Signalelektronik 1, die Ansteuersignale generiert, angesteuert werden.

Efindungsgemäß wird zweitens eine Diode D_{S1} bzw. D_{S2} in Serie zum Halbleiterschalter angeordnet. Die Diode D_{S1} bzw. D_{S2} verhindert dass der Ladestrom I_{L1} bzw. I_{L2} über die Freilaufdioden D_{F1} bzw. D_{F2} abfließen kann, und zwar auch dann nicht, wenn zum Zeitpunkt des Ladevorgangs die parallel liegenden Freilaufdioden den Laststrom führen und damit leitend sind.

Sind MOSFETS als Halbleiterschalter vorgesehen, so sind damit gleichzeitig deren Intrinsic-Dioden als Freilaufdioden unwirksam, da statt der intrinsischen Dioden erfindungsgemäß separate Freilaufdioden D_{F1} und D_{F2} mit optimiertem Schaltverhalten vorgesehen werden. Bei Verwendung von MOSFET- Halbleiterschaltern erfüllen die Dioden D_{S1} bzw. D_{S2} einen doppelten Zweck, da sie sowohl die Möglichkeit schaffen, eine zwangsweise Ladung der Drain-Source-Kapazität als auch die Verwendung von optimierten Freilaufdioden zu ermöglichen. Die Sperrfähigkeit der Dioden D_{S1} bzw. D_{S2} ist entsprechend der vorgesehenen Aufladung zu wählen.

Bei einem weiteren erfindungsgemäßen Ausführungsbeispiel wird ein Halbleiterschalter verwendet, dessen Drain-Source-Kapazität mit steigender Spannung stark abnimmt. Von Vorteil ist dabei, dass eine Aufladung auf eine relativ geringe Spannung ausreicht um Überspannungen zu vermeiden, und daher serielle Dioden D_{S1} bzw. D_{S2} mit geringer Sperrfähigkeit und damit ebenfalls geringer Flussspannung verwendbar sind.

Bei einem weiteren erfindungsgemäßen Ausführungsbeispiel wird die Steuerung der Ladeschaltung aus dem Signal der Gateansteuerung abgeleitet. Vorteilhaft ist dabei, dass nur ein einziges Signal potentialtrennend geführt werden muss. Eine beispielhafte Kombination von Ansteuer- und Ladeschaltung für den Schalter S₂ ist in Figur 3 vereinfacht dargestellt. Der angedeutete Gatetreiber V₂ wird durch eine bezüglich Source-Potential bipolare Hilfsspeisespannung U_{H+} und U_{H-} versorgt. Der Gatetreiber beinhaltet zweckmäßigerweise eine Potentialtrennung zur Signalelektronik 1 aus Figur 2, welche die Ansteuersignale generiert.

Über den Gatevorwiderstand R_{g2} wird das Gate des Halbleiterschalters S₂ angesteuert. C_{g2} bezeichnet dabei die interne Gate-Kapazität des Schalters S₂. Dieser dem Stand der Technik entsprechende Schaltungsteil wird nun durch einen erfindungsgemäßen Schaltungsteil bestehend aus Basiswiderstand R_{b2}, Ladetransistor T₂, Ladediode D_{L2}, Ladeinduktivität L_{L2} in Verbindung mit der seriellen Diode D_{S2} erweitert. Wechselt die Ausgangsspannung des Gatetreibers V₂ von U_{H+} nach U_{H-} gleichbedeutend S₂ wird ausgeschaltet, so wird gleichzeitig der Ladetransistor T₂ eingeschaltet, da nun ein Basisstrom über R_{b2} fließen kann. Über T₂ und D_{L2} liegt nun die Hilfsspannung U_{H+} an der Serienschaltung aus L_{D2} und Cᵢ₂. Nun findet ein Ladevorgang statt, der nach der gleichen Gesetzmäßigkeit abläuft, wie der eingangs beschriebene Umschwingvorgang, aus dem die transiente Überspannung im Fall 2 resultiert. Vorteiligerweise ist auch beim Einsatz dieser Art von Ladeschaltung ein Halbleiterschalter S₂ mit einer stark spannungsabhängigen Drain-Source-Kapazität verwendbar. Eine relativ geringe Hilfsspannungsversorgung in Verbindung mit einer geschalteten Lade-Induktivität reicht dann aus, um die Draln-Source-Kapazität auf weit über das Doppelte der Hilfsspannungsversorgung U_{H+} und damit ausreichend vorzuladen. Die Lade-Diode D_{L2} verhindert ein Rückschwingen des Ladestroms. Der Wert der Induktivität von L_{L2} wird so bemessen, dass innerhalb der Totzeit, also vor dem Einschalten des gegenüberliegenden Halbleiterschalters S₁ eine ausreichend hohe Vorladung erzielt wird. Je kleiner die Lade-Induktivität gewählt wird, desto größer wird der Ladestrom und umso schneller ist der Ladevorgang abgeschlossen.

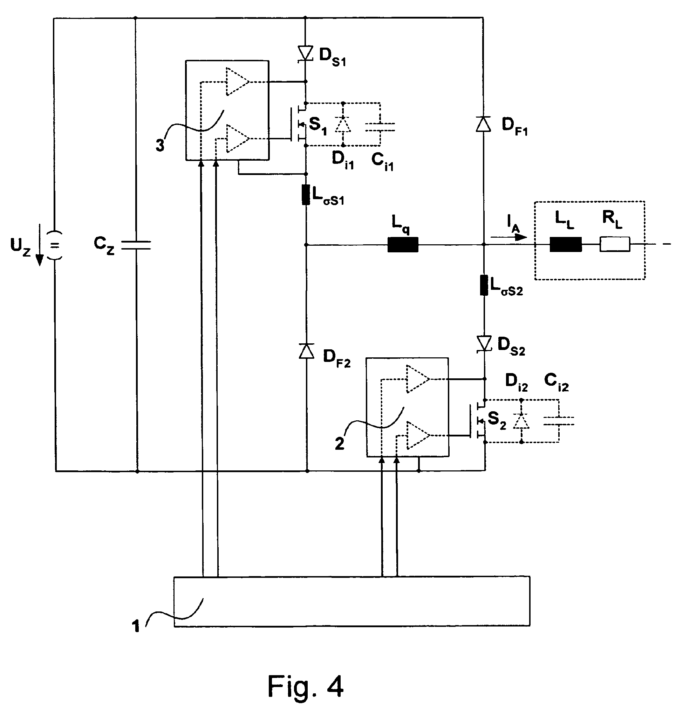

Eine vorteilhafte Weiterbildung ist in Figur 4 abgebildet. Dabei wird ein Brückenzweig in zwei Schaltungsteile getrennt und durch eine Querinduktivität L_{q} verbunden. Der erste Schaltungsteil enthält den oberen Schalter S₁ samt serieller Diode D_{S1} und die untere Freilaufdiode D_{F2}. Der zweite Schaltungsteil enthält den unteren Schalter S₂ samt serieller Diode D_{S2} und die obere Freilaufdiode D_{F1}. Die zusätzliche Querinduktivität vergrößert die für den oben erwähnten Reihenschwingkreis maßgebliche Induktivität, so dass die Amplitude des Umschwingstromes verringert ist. Die in den Streuinduktivitäten gespeicherte Energie, die in die Drain-Source-Kapazität umgespeichert wird, ist damit ebenfalls reduziert, so dass die Spannungsüberhöhung geringer ist. Die in der Querinduktivität gespeicherte Energie trägt nicht zur Spannungsüberhöhung bei. Erreicht die Spannung am Halbleiterschalter die Zwischenkreisspannung, kommutiert der dem Ausgangsstrom überlagerte Umschwingstrom in L_{q} in einen der Freilaufkreise D_{S1} - S₁ - L_{σS1} - D_{F1} bzw. Dₛ₂ - S₂ - L_{σS2} - D_{F2} und wird dort durch die Flussspannungen der Freilaufdioden und Halbleiterschalter in Verlustwärme umgesetzt. Diese Maßnahme für sich allein vermindert die auftretenden Überspannungen, erhöht aber die Leitendverluste in den Halbleiterbauelementen. Wird diese Maßnahme aber mit dem oben beschriebenen Vorlade-Verfahren kombiniert, so werden Überspannungen vermieden und Leitendverluste reduziert, da der Umschwingstrom in L_{q} durch das oben beschriebene Vorladen vermindert ist. Als Querinduktivität ist schon eine äußerst geringe Induktivität ausreichend, beispielsweise 500 nH. Dies entspricht einem Wert, der ein Vielfaches der üblichen parasitären Induktivitäten der Leitungsführung beträgt, was für die beschriebene Wirkungsweise ausreichend ist. Die Bauteilgröße ist somit äußerst gering.

Bei allen Ausführungsbeispielen ist zu beachten, dass je höher die Spannung ist, auf die die Drain-Source-Kapazität vorgeladen wird, desto geringer fällt die folgende transiente Überspannung aus. Dabei ist zu beachten, dass schon eine Vorladung auf eine relative geringe Spannung die anschließende transiente Überspannung sehr stark reduziert. Bei dem MOSFET- Halbleiterschalter aus Figur 3 kann beispielsweise eine Vorladung auf 50 V bis 100 V als ausreichend angesehen werden, wobei die die Halbbrücke versorgende Zwischenkreisspannung bei 400 V bis 600 V liegt. Der Grund hierfür liegt darin, dass die Drain-Source-Kapazität ab 100 V einen niedrigen Wert hat.

### Bezugszeichenliste

- U_{z}: Zwischenkreisspannung
- C_{z}: Zwischenkreiskondensator
- HB₁: Halbbrücke 1
- S₁/S₂: oberer/unterer Schalter der Halbbrücke 1
- S₃/S₄: oberer/unterer Schalter der Halbbrücke 2

- Dᵢ₁/Dᵢ₂: Intrinsic-Diode von S1/S2
- Cᵢ₁/Cᵢ₂: Drain-Source-Kapazität von S1/S2
- L_{σS1}/L_{σS2}: parasitäre Streuinduktivitäten des Aufbaus

- R_{L}/L_{L}: Lastwiderstand/Lastinduktivität

- D_{S1}/D_{S2}: obere/untere serielle Dioden
- D_{F1}/D_{F2}: obere/untere Freilaufdiode

- U_{H+}/U_{H-}: positive/negative Hiffsspannungsversorgung
- V₂: Gatetreiber
- R_{b2}: Basisvorwiderstand
- T₂: Ladetransistor
- D_{L2}: Ladediode
- L_{L2}: Ladeinduktivität
- R_{g2}: Gatevorwiderstand
- C_{g2}: Gatekapazität

- L_{q}: Querinduktivität

- 1: Signalelektronik
- 2: Ansteuer- und Ladeschaltung
- 3: Ansteuer- und Ladeschaltung

## Patentansprüche

1. **Schaltungsanordnung**, umfassend einen Halbleiterschalter (S2) zum Aufladen einer an den Hauptstromanschlüssen des Halbleiterschalters (S₂) wirksamen Kapazität (Cᵢ₂), also einer intrinsischen Kapazität (C12) des Halbleiterschalters (S2), insbesondere der Drain-Source-Kapazität (Cᵢ₁, Cᵢ₂) eines MOSFET- Halbleiterschalters oder der Kollektor-Emitter-Kapazität eines IGBT- Halbleiterschalters,
**gekennzeichnet durch** einen
Ladestrompfad, der eine Induktivität (L_{D2}) umfasst, die mit der intrinsischen Kapazität (Cᵢ₂) des Halbleiterschalters (S2) einen Reihenschwingkreis bildet, so dass eine Vorladung der intrinsischen Kapazität (C₁₂) des Halbleiterschalters (S2) auf ein höheres Spannungsniveau ausführbar ist als die Versorgungsspannung zur Verfügung stellt.

2. Schattungsanordnung nach Anspruch 1, in der in einem
Hauptstrompfad eine Diode (D_{S2}) angeordnet ist.

3. **Schaltungsanordnung nach Anspruch 2,**
**dadurch gekennzeichnet, dass**
die Vorladung, insbesondere eine zumindest teilweise Aufladung, der wirksamen Kapazität (Cᵢ₂) vom Ansteuersignal des Halbleiterschalters (S₂) zwangsweise über den Ladestrompfad gesteuert wird.

4. **Schaltungsanordnung** nach mindestens einem der vorangegangenen Ansprüche,
**dadurch gekennzeichnet, dass**
die Energie zum Laden nicht dem Hauptstrompfad entnommen wird, insbesondere der Ladestrompfad vom Hauptstrompfad, insbesondere Kanalstrompfad, verschieden ist, insbesondere der den zu schaltenden Leistungsstrom führt.

5. Schaltungsanordnung nach mindestens einem der vorangegangenen Ansprüche,
**dadurch gekennzeichnet, dass**
im Hauptstrompfad eine Diode (D_{S2}), insbesondere Zenerdiode oder Schottky-Diode, angeordnet ist, insbesondere also dem Halbleiterschalter (S₂) eine Diode (D_{S2}) in Reihe zugeschaltet ist.

6. **Schaltungsanordnung** nach mindestens einem der vorangegangenen Ansprüche,
**dadurch gekennzeichnet, dass**
im Ladestrompfad ein Steuer-Halbleiterschalter (T₂) vorgesehen ist

7. **Schaltungsanordnung** nach mindestens einem der vorangegangenen Ansprüche,
**dadurch gekennzeichnet, dass**
der Ladestrompfad von derselben Spannungsquelle gespeist wird, aus der auch eine Treiberschaltung zur Erzeugung des Steuerstroms für den Steueranschluss des Halbleiterschalters (S₂) gespeist wird, insbesondere wobei die Spannungsquelle galvanisch getrennt ist von einer Signalelektronik (1) eines Umrichters.

8. Schaltungsanordnung nach mindestens einem der vorangegangenen Ansprüche,
**dadurch gekennzeichnet, dass**
der Halbleiterschalter (S₂) in einem Brückenzweig einer Brückenschaltung angeordnet ist.

9. **Schaltungsanordnung** nach mindestens einem der vorangegangenen Ansprüche,
**dadurch gekennzeichnet, dass**
das Vorladen im Wesentlichen während der Totzeit ausgeführt wird, insbesondere also während eines desjenigen Zeitabschnitts, in welchem beide Halbleiterschalter (S₁,S₂) einer Halbbrücke HB₁ der Brückenschaltung ausgeschaltet sind.

10. **Schaltungsanordnung** nach mindestens einem der vorangegangenen Ansprüche,
**dadurch gekennzeichnet, dass**
im Ladestrompfad schon ein Ladestrom aufgebaut wird, während sich der auszuschaltende Halbleiterschalter (S₂) sich noch im leitenden Zustand befindet.

11. **Schaltungsanordnung** nach mindestens einem der vorangegangenen Ansprüche,
**dadurch gekennzeichnet, dass**
die Induktivität (L_{D2}) derart bemessen ist, dass der aus der Induktivität (L_{D2}) und der wirksamen Kapazität (Cᵢ₂) zusammengesetzte Reihenschwingkreis bis auf die als Vorladung gewünschte Spannung aufschwingt, insbesondere innerhalb der Totzeit das Maximum des Aufschwingens der Spannung erreicht.

12. Schaltungsanordnung nach mindestens einem der vorangegangenen Ansprüche.
**dadurch gekennzeichnet, dass**
die wirksame Kapazität (Cᵢ₂) derart ausgeführt ist, dass ihre Kapazität (Cᵢ₂) bei zunehmender Spannung abnimmt, insbesondere wobei auch ihre Kapazitätsänderung pro Spannungszunahme abnimmt, also ihre Kapazität bei zunehmender Spannung überproportional mit der Spannung abnimmt.

13. Schaltungsanordnung nach mindestens einem der vorangegangenen Ansprüche,
**dadurch gekennzeichnet, dass**
im Hauptstrompfad des Halbleiterschalters eine Diode (D_{S1}, D_{S2}) seriell angeordnet ist und eine Freilaufdiode (D_{F1}, D_{F2}) dieser Reihenschaltung parallel geschaltet ist, insbesondere wobei die Dioden antiparallel zueinander orientiert sind.
und/oder dass
die Schaltungsanordnung die Endstufe eines Wechselrichters oder Umrichters ist. und/oder dass
die mittels der Vorladung erreichte Spannung der wirksamen Kapazität (Cᵢ₂) weniger als 30%, insbesondere weniger als 15%, der zu schaltenden Spannung erreicht.

14. Brückenschaltung mit einer Schaltungsanordnung nach einem der Ansprüche 1 bis 13,
**dadurch gekennzeichnet, dass**
eine Halbbrücke HB₁ aus zwei parallel geschalteten Reihenschaltungen besteht, die jeweils einen ersten und eine zweiten in Reihe geschalteten Schaltungsteil aufweisen, wobei eine Querinduktivität (L_{g}) zur Verbindung der elektrischen Verbindungspunkte der beiden Schaltungsteile einer jeweiligen Reihenschaltung vorgesehen ist,
wobei ein erster Schaltungsteil der ersten Reihenschaltung einen Halbleiterschalter (S₁) samt seriell zugeschalteter Diode (D_{S1}) und der zweite Schaltungsteil der ersten Reihenschaltung eine Freilaufdiode (D_{F1}) aufweist,
wobei ein erster Schaltungsteil der zweiten Reihenschaltung eine Freilaufdiode (D_{F2}) und der zweite Schaltungsteil der zweiten Reihenschaltung einen Halbleiterschalter (S₂) samt seriell zugeschalteter Diode (D_{S2}) aufweist,
wobei die ersten Schaltungsteile mit dem höheren Potential der Versorgungsspannung und die zweiten Schaltungsteile mit dem niedrigeren verbunden sind.

15. Brückenschattung nach dem vorhergehenden Anspruch.
**dadurch gekennzeichnet, dass**
die Querinduktivität (L_{q}) einen Mittelabgriff aufweist, welcher den Ausgangszweig der Halbbrücke HB₁ darstellt.

## Claims

1. Circuit configuration, comprising a semiconductor switch (S₂) for charging a capacitance (C₁₂) effective on the main current terminals of the semiconductor switch (S₂), that is, of an intrinsic capacitance (Cᵢ₂) of the semiconductor switch (S₂), in particular of the drain-source capacitance (C₁₁, C₁₂) of a MOSFET semiconductor switch or of the collector-emitter capacitance of an IGBT semiconductor switch,
**characterised by**
a charging current path, which comprises an inductance (L_{D2}), which forms with the intrinsic capacitance (C₁₂) of the semiconductor switch (S₂) a series resonant circuit, so that a precharging of the intrinsic capacitance (C₁₂) of the semiconductor switch (S₂) to a higher voltage level than the supply voltage provides can be implemented.

2. Circuit configuration according to claim 1, in which a diode (D_{S2}) is arranged in a main current path.

3. Circuit configuration according to claim 2,
**characterised in that**
the precharging, in particular an at least partial charging, of the effective capacitance (C₁₂) is forcibly controlled by the control signal of the semiconductor switch (S₂) via the charging current path.

4. Circuit configuration according to at least one of the preceding claims,
**characterised in that**
the energy for charging is not taken from the main current path, in particular the charging current path is distinct from the main current path, in particular channel current path, in particular the one that conducts the power current to be switched.

5. Circuit configuration according to at least one of the preceding claims,
**characterised in that**
a diode (D_{S2}), in particular a Zener diode or a Schottky diode, is disposed in the main current path, that is, in particular, a diode (D_{S2}) is connected in series to the semiconductor switch (S₂).

6. Circuit configuration according to at least one of the preceding claims,
**characterised in that**
a control semiconductor switch (T₂) is provided in the charging current path.

7. Circuit configuration according to at least one of the preceding claims,
**characterised in that**
the charging current path is supplied by the same voltage source, from which a driver circuit for producing the control current for the control terminal of the semiconductor switch (S₂) is supplied, in particular the voltage source being electrically isolated from a signal electronics (1) of a converter.

8. Circuit configuration according to at least one of the preceding claims,
**characterised in that**
the semiconductor switch (S₂) is situated in a bridge branch of a bridge circuit.

9. Circuit configuration according to at least one of the preceding claims,
**characterised in that**
the precharging is substantially performed during the dead time, that is, in particular during the period in which both semiconductor switches (S₁, S₂) of a half-bridge HB₁ of the bridge circuit are switched off.

10. Circuit configuration according to at least one of the preceding claims,
**characterised in that**
a charging current is already built up in the charging current path, while the semiconductor switch (S₂) to be switched off is still in the conductive state.

11. Circuit configuration according to at least one of the preceding claims,
**characterised in that**
the inductance (L_{D2}) is dimensioned such that the series resonant circuit composed of the inductance (L_{D2}) and the effective capacitance (C₁₂) swings up to the voltage desired as a precharge, in particular reaches the maximum of the upswing of the voltage within the dead time.

12. Circuit configuration according to at least one of the preceding claims,
**characterised in that**
the effective capacitance (C₁₂) is configured such that its capacitance (C₁₂) diminishes with increasing voltage, in particular even its change in capacitance per voltage increase diminishes, that is, its capacitance diminishes disproportionally with increasing voltage.

13. Circuit configuration according to at least one of the preceding claims,
**characterised in that**
a diode (D_{S1}, D_{S2}) is serially arranged in the main current path of the semiconductor switch and a free-wheeling diode (D_{F1}, D_{F2}) is connected in parallel to this series circuit, in particular the diodes being oriented antiparallel with respect to each other,
and/or **in that**
the circuit configuration is the output stage of an inverter or converter,
and/or **in that**
the voltage of the effective capacitance (C₁₂) achieved by means of the precharging reaches less than 30%, in particular less than 15%, of the voltage to be switched.

14. Bridge circuit having a circuit configuration according to one of claims 1 to 3,
**characterised in that**
a half-bridge HB₁ is composed of two series circuits connected in parallel, which respectively have a first and a second circuit part connected in series, a transverse inductance (Lq) being provided to connect electrical connection points of the two circuit parts of a respective series circuit,
a first circuit part of the first series circuit having a semiconductor switch (S₁) including a serially connected diode (D_{S1}) and the second circuit part of the first series circuit having a free-wheeling diode (D_{F1}),
a first circuit part of the second series circuit having a free-wheeling diode (D_{F2}) and the second circuit part of the second series circuit having a semiconductor switch (S₂) including a serially connected diode (D_{S2})
the first circuit parts being connected to the higher potential of the supply voltage and the second circuit parts being connected to the lower potential.

15. Bridge circuit according to the preceding claim,
**characterised in that**
the transverse inductance (Lq) has a centre tap, which represents the output branch of the half-bridge HB₁.

## Revendications

1. Circuit comprenant un commutateur à semi-conducteurs (S₂) pour charger une capacité (Cᵢ₂) active aux bornes électriques principales du commutateur à semi-conducteurs (S₂), donc une capacité intrinsèque (Cᵢ₂) du commutateur à semi-conducteurs (S₂), en particulier la capacité drain-source (Cᵢ₁, Cᵢ₂) d'un commutateur à semi-conducteurs de type MOSFET ou la capacité collecteur-émetteur d'un commutateur à semi-conducteurs de type IGBT,
**caractérisé par**
un trajet de courant de charge qui comprend une inductance (L_{D2}) qui forme un circuit oscillant série avec la capacité intrinsèque (Cᵢ₂) du commutateur à semi-conducteurs (S₂), de sorte qu'une précharge de la capacité intrinsèque (Cᵢ₂) du commutateur à semi-conducteurs (S₂) soit réalisable à un niveau de tension plus élevé que celui que la tension d'alimentation met à disposition.

2. Circuit selon la revendication 1, dans lequel une diode (D_{S2}) est disposée dans le trajet de courant principal.

3. Circuit selon la revendication 2,
**caractérisé en ce que**
la précharge, en particulier une charge au moins partielle de la capacité active (Cᵢ₂), est pilotée de manière forcée via le trajet de courant de charge par le signal de commande du commutateur à semi-conducteurs (S₂).

4. Circuit selon au moins l'une des revendications précédentes,
**caractérisé en ce que**
l'énergie pour charger n'est pas prélevée du trajet de courant principal, en particulier le trajet de courant de charge est différent du trajet de courant principal, en particulier du trajet de courant de canal, en particulier celui qui conduit le courant de puissance à commuter.

5. Circuit selon au moins l'une des revendications précédentes,
**caractérisé en ce que**
une diode (D_{S2}), en particulier une diode Zener ou une diode Schottky, est disposée dans le trajet de courant principal, en particulier donc une diode (D_{S2}) est couplée en série avec le commutateur à semi-conducteurs (S₂).

6. Circuit selon au moins l'une des revendications précédentes,
**caractérisé en ce que**
un commutateur à semi-conducteurs de commande (T₂) est prévu dans le trajet de courant de charge.

7. Circuit selon au moins l'une des revendications précédentes,
**caractérisé en ce que**
le trajet de courant de charge est alimenté par la même source de tension à partir de laquelle est alimenté un circuit d'attaque servant à générer le courant de commande pour la borne de commande du commutateur à semi-conducteurs (S₂), en particulier la source de tension étant séparée galvaniquement d'une électronique de signalisation (1) d'un variateur.

8. Circuit selon au moins l'une des revendications précédentes,
**caractérisé en ce que**
le commutateur à semi-conducteurs (S₂) est disposé dans une branche de pont d'un circuit en pont.

9. Circuit selon au moins l'une des revendications précédentes,
**caractérisé en ce que**
la précharge est réalisée sensiblement pendant le temps mort, en particulier donc pendant l'intervalle de temps dans lequel les deux commutateurs à semi-conducteurs (S₁, S₂) d'un demi-pont HB₁ du circuit en pont sont désactivés.

10. Circuit selon au moins l'une des revendications précédentes,
**caractérisé en ce que**
un courant de charge est déjà établi dans le trajet de courant de charge alors que le commutateur à semi-conducteurs (S₂) à désactiver se trouve encore dans l'état conducteur.

11. Circuit selon au moins l'une des revendications précédentes,
**caractérisé en ce que**
l'inductance (L_{D2}) est dimensionnée de façon que le circuit oscillant série composé de l'inductance (L_{D2}) et de la capacité active (Cᵢ₂) oscille jusqu'à la tension souhaitée comme précharge, en particulier atteigne le maximum d'oscillation de la tension pendant le temps mort.

12. Circuit selon au moins l'une des revendications précédentes,
**caractérisé en ce que**
la capacité active (Cᵢ₂) est réalisée de façon que sa capacité (Cᵢ₂) diminue lorsque la tension augmente, en particulier sa variation de capacité diminuant aussi par augmentation de la tension, donc que sa capacité diminue plus que proportionnellement à la tension lorsque la tension augmente.

13. Circuit selon au moins l'une des revendications précédentes,
**caractérisé en ce que**
une diode (D_{S1}, D_{S2}) est disposée en série dans le trajet de courant principal du commutateur à semi-conducteurs et une diode de roue libre (D_{F1}, D_{F2}) est couplée en parallèle avec ce circuit série, en particulier les diodes étant orientées de manière antiparallèle l'une par rapport à l'autre,
et/ou que
le circuit est l'étage final d'un onduleur ou d'un variateur,
et/ou que
la tension de la capacité active (Cᵢ₂) atteinte au moyen de la précharge atteint moins de 30 %, en particulier moins de 15 % de la tension à commuter.

14. Circuit en pont comprenant un circuit selon au moins l'une des revendications 1 à 13,
**caractérisé en ce que**
un demi-pont HB₁ est composé de deux circuit série couplés en parallèle, qui présentent chacun une première et une deuxième partie de circuit couplées en série, une inductance transversale (L_{q}) étant prévue pour relier les points de liaison électrique des deux parties de circuit d'un circuit série respectif,
une première partie de circuit du premier circuit série présentant un commutateur à semi-conducteurs (S₁) avec une diode (D_{S1}) couplée en série et la deuxième partie de circuit du premier circuit série présentant une diode de roue libre (D_{F1}),
une première partie de circuit du deuxième circuit série présentant une diode de roue libre (D_{F2}) et la deuxième partie de circuit du deuxième circuit série présentant un commutateur à semi-conducteurs (S₂) avec une diode (D_{S2}) couplée en série,
les premières parties de circuit étant reliées au potentiel le plus élevé et les deuxièmes parties de circuit au potentiel le plus bas de la tension d'alimentation.

15. Circuit en pont selon la revendication précédente,
**caractérisé en ce que**
l'inductance transversale (Lq) présente une prise médiane qui constitue la branche de sortie du demi-pont HB₁.
